# EUROPÄISCHE PATENTSCHRIFT

(11) **EP 4 542 804 B1**
(45) Veröffentlichungstag und Bekanntmachung des Hinweises auf die Patenterteilung: **14.01.2026**
(21) Anmeldenummer: 24202129.3
(22) Anmeldetag: 24.09.2024
(51) Int. Cl.: H02J 1/00, B60R 16/03

(54) **VERBINDUNGSSCHALTUNG**
INTERCONNECTION CIRCUIT
CIRCUIT DE CONNEXION

(30) Priorität: 25.09.2023 DE 102023125834
(43) Veröffentlichungstag der Anmeldung: 23.04.2025
(73) Patentinhaber: Eberspächer Controls Esslingen GmbH & Co. KG, 73730 Esslingen (DE); Eberspächer Controls Landau GmbH & Co. KG, 76829 Landau (DE)
(72) Erfinder: Wandres, Steffen, Kandel (DE); Kriessl, Michael, Göppingen (DE)
(74) Vertreter: Ruttensperger Lachnit Trossin Gomoll

(56) Entgegenhaltungen:
- DE-A1- 102014 109 142

## Beschreibung

Die vorliegende Erfindung betrifft eine Verbindungsschaltung, durch welche beispielsweise in einem Fahrzeug eine Mehrzahl von Verbrauchern elektrischer Energie mit einer Gleichspannungsquelle verbunden werden kann.

Vor allem bei elektrisch betriebenen Fahrzeugen besteht die Notwendigkeit, auch im deaktivierten Zustand eines Fahrzeugs verschiedene Verbraucher elektrischer Energie, wie zum Beispiel Steuergeräte, in einem aktiven Zustand zu halten. In diesem Zustand fließt zu derartigen Verbrauchern elektrischer Energie im Allgemeinen ein vergleichsweise kleiner Ruhestrom im Bereich von wenigen 10 mA. Auch die Elektronikkomponenten, welche in einem derartigen Zustand die Verbindung zwischen Verbrauchern elektrischer Energie und einer Gleichspannungsquelle aufrecht erhalten, benötigen elektrische Energie. Der Betriebsstrom derartiger Elektronikkomponenten liegt im Allgemeinen im Bereich von unter 100 µA.

Weiter ist es erforderlich, auch in einem deaktivierten Zustand eines Fahrzeugs Systembereiche aktiv zu halten, welche das Auftreten von Fehlerzuständen, wie zum Beispiel eines Überstroms bzw. eines Kurzschlusses, erkennen und gegebenenfalls Maßnahmen einleiten können, die ein vollständiges Entleeren der Gleichspannungsquelle verhindern und das Auftreten potenziell kritischer Situationen, wie zum Beispiel eines Kabelbrands oder dergleichen, verhindern. Weiter muss auch die Möglichkeit bestehen, selbstständig aktiv werdende Systembereiche, wie zum Beispiel eine Standheizung in einem Fahrzeug, auch bei grundsätzlich deaktiviertem Fahrzeug betreiben zu können, also mit elektrischer Energie aus der Gleichspannungsquelle versorgen zu können. Die DE102014109142A1 offenbart eine Schaltung zur Versorgung von Lasten in einem Kraftfahrzeug, wobei ein Halbleiterschalter aktivierbar ohne einen nennenswerten Ansteuerstromaktivierbar ist, wobei eine Überstromabschaltung zum Schutz des Halbleiterschalters und zum Schutz einer Leitung vorgesehen ist, und wobei diese Überstromabschaltung keinen nennenswerten Ansteuerstrom benötigt.

Es ist die Aufgabe der vorliegenden Erfindung, eine Verbindungsschaltung zur Verbindung einer Mehrzahl von Verbrauchern elektrischer Energie, beispielsweise in einem Fahrzeug, mit einer Gleichspannungsquelle vorzusehen, welche bei minimiertem Energiebedarf eine hohe Sicherheit zur Erkennung von Fehlerzuständen bietet.

Erfindungsgemäß wird diese Aufgabe gelöst durch eine Verbindungsschaltung zur Verbindung einer Mehrzahl von Verbrauchern elektrischer Energie, vorzugsweise in einem Fahrzeug, mit einer Gleichspannungsquelle, umfassend:
- in Zuordnung zu jedem Verbraucher elektrischer Energie einer Mehrzahl von Verbrauchern elektrischer Energie, jeweils einen Verbindungsschalter zum Herstellen einer Verbindung des Verbrauchers elektrischer Energie mit einer Gleichspannungsquelle,
- in Zuordnung zu jedem der Verbraucher elektrischer Energie der Mehrzahl von Verbrauchern elektrischer Energie, jeweils eine Verbindungsschalter-Ansteuerschaltung zur Zufuhr eines Stroms zu dem jeweiligen Verbraucher elektrischer Energie und zum Ansteuern des dem jeweiligen Verbraucher elektrischer Energie zugeordneten Verbindungsschalters zum Herstellen der Verbindung des jeweiligen Verbrauchers elektrischer Energie mit der Gleichspannungsquelle.

Die Verbindungschalter-Ansteuerschaltung umfasst einen Schalttransistor, wobei eine Basis-Emitter-Spannung des Schalttransistors von dem dem jeweils zugeordneten Verbraucher elektrischer Energie über die Verbindungschalter-Ansteuerschaltung zugeführten Strom abhängig ist, und wobei bei eine Schwellen-Spannung übersteigender Basis-Emitter-Spannung an einem Kollektor-Anschluss des Schalttransistors ein Schaltsignal zum Schalten des jeweils zugeordneten Verbindungsschalters in einen eine Verbindung des jeweils zugeordneten Verbrauchers elektrischer Energie mit der Gleichspannungsquelle herstellenden Geschlossen-Zustand erzeugt wird.

Bei der erfindungsgemäß aufgebauten Verbindungschaltung können die über diese mit elektrischer Energie aus der Gleichspannungsquelle zu speisenden Verbraucher elektrischer Energie grundsätzlich über die diesen jeweils zugeordnete Verbindungschalter-Ansteuerschaltung gespeist werden, insbesondere um diesen beispielsweise bei deaktiviertem Fahrzeug einen vergleichsweise niedrigen Ruhestrom zuzuführen. Steigt der Ruhestrom an, was einen erhöhten Energiebedarf indiziert, nimmt auch die Basis-Emitter-Spannung zu, verbunden mit der Folge, dass bei Erreichen eines Schwellenstroms bzw. einer damit in Zusammenhang stehenden Basis-Emitter-Spannung die Emitter-Kollektor-Strecke des Schalttransistors leitend geschaltet wird und infolgedessen am Kollektor-Anschluss des Schalttransistors ein Schaltsignal generiert wird. Dieses Schaltsignal wird erfindungsgemäß genutzt, um den zugeordneten Verbindungsschalter leitend zu schalten, also in seinen Geschlossen-Zustand zu bringen, und dadurch eine direkte Verbindung zwischen der Gleichspannungsquelle und dem einen höheren Stromfluss auslösenden Verbraucher elektrischer Energie herzustellen. In diesem Zustand wird dieser Verbraucher elektrischer Energie dann unter Umgehung der Verbindungsschalter-Ansteuerschaltung direkt aus der Gleichspannungsquelle gespeist, wodurch eine Überlastung der grundsätzlich nur zur Versorgung mit einem vergleichsweise niedrigen Ruhestrom vorgesehenen und dimensionierten Verbindungsschalter-Ansteuerschaltung vermieden wird. Gleichzeitig kann durch das Leitendschalten des zugeordneten Verbindungsschalters erkannt werden, dass ein potenziell kritischer oder ggf. ungewöhnlicher Zustand im Bereich des mit diesem Verbindungsschalter zusammenwirkenden Verbrauchers elektrischer Energie aufgetreten ist, so dass weitere Überwachungs- bzw. Schutzmaßnahmen ergriffen werden können.

Die Verbindungsschalter-Ansteuerschaltung bzw. jede der den verschiedenen Verbrauchern elektrischer Energie zugeordneten Verbindungsschalter-Ansteuerschaltungen kann eine Dioden-Schaltung umfassen, wobei die Basis-Emitter-Spannung des Schalttransistors im Zusammenhang mit einem Spannungsabfall an einer Referenz-Diode der Dioden-Schaltung steht. Der an einer Diode auftretende Spannungsabfall hängt im Allgemeinen ab von dem über eine Diode in Vorwärtsrichtung fließenden Strom. Mit zunehmendem in Vorwärtsrichtung fließendem Strom nimmt der Spannungsabfall über eine Diode zu. Dieser Spannungsabfall kann abgegriffen und als Indikator für den über eine derartige Diode fließenden Strom genutzt werden.

Beispielsweise kann durch die Parallelschaltung der Basis-Emitter-Strecke zu der Referenz-Diode der Dioden-Schaltung die Basis-Emitter-Spannung im Wesentlichen einem Spannungsabfall an der Referenz-Diode entsprechen. Mit zunehmendem Stromfluss über die Referenz-Diode und dementsprechend zunehmender Vorwärtsspannung an der Referenz-Diode nimmt auch die Basis-Emitter-Spannung zu, so dass bei Erreichen des Schwellenstroms durch eine ausreichend hohe Basis-Emitter-Spannung die Emitter-Kollektor-Strecke des Schalttransistors leitend geschaltet wird.

Für einen kostengünstigen, gleichwohl zuverlässigen Aufbau der Verbindungschaltung wird vorgeschlagen, dass die Referenzdiode eine pn-Diode, vorzugsweise Silizium-Diode, ist.

Bei einer hinsichtlich einer präziseren Auslegung der das Durchschalten des Schalttransistors bewirkenden Vorwärtsspannung der Referenz-Diode der Dioden-Schaltung vorteilhaften Ausgestaltung kann vorgesehen sein, dass die Dioden-Schaltung wenigstens einen zu der Referenz-Diode in Serie geschalteten elektrischen Widerstand umfasst, und dass die Basis-Emitter-Spannung im Wesentlichen einem Spannungsabfall an der Serienschaltung aus Referenz-Diode und wenigstens einem elektrischem Widerstand entspricht.

Dabei ist vorzugsweise die Referenz-Diode eine Schottky-Diode oder Germanium-Diode. Eine derartige Diode zeichnet sich im Vergleich zu einer Silizium-Diode durch eine geringere Schwellenspannung bzw. minimale Vorwärtsspannung aus, bei welcher die Diode in einen leitenden, niederohmigen Zustand übergeht. Ferner ist der Widerstand im leitenden Zustand geringer.

Um bei kurzzeitig stärkerem Anstieg des über die Verbindungsschalter-Ansteuerschaltung fließenden Stroms eine Überlastung der Referenzdiode zu vermeiden, kann die Dioden-Schaltung eine zu der Referenz-Diode parallel geschaltete Last-Diode umfassen.

Dabei ist es vorteilhaft, wenn eine Schwellenspannung der Last-Diode größer ist, als eine Schwellenspannung der Referenz-Diode. Somit ist dafür gesorgt, dass im Normalzustand, also bei fließendem Ruhestrom, nur die Referenz-Diode in ihrem leitenden Zustand ist und der an der Referenz-Diode auftretende Spannungsabfall als Basis-Emitter-Spannung abgegriffen werden kann. Bei kurzzeitig stark ansteigendem Strom geht auch die Last-Diode in ihren leitenden Zustand über, so dass auch in der kurzen Zeitdauer bis zum Schließen des zugeordneten Verbindungsschalters bei ansteigendem Strom eine Beschädigung der Referenz-Diode vermieden werden kann

Um beim Durchschalten des Schalttransistors einer jeweiligen Verbindungsschalter-Ansteuerschaltung die am Kollektor-Anschluss als Schaltsignal auftretende Spannung zum Ansteuern des Verbindungsschalters nutzen zu können, wird vorgeschlagen, dass die Verbindungsschalter-Ansteuerschaltung eine Steuersignalschaltung umfasst, wobei die Steuersignalschaltung dazu ausgebildet ist, bei am Kollektor-Anschluss der Verbindungschalter-Ansteuerschaltung erzeugtem Schaltsignal ein an den zugeordneten Verbindungsschalter anzulegendes Steuersignal zum Schalten des Verbindungsschalters in seinen Geschlossen-Zustand zu erzeugen.

Die Verbindungsschalter-Ansteuerschaltung weist vorzugsweise einen mit der Gleichspannungsquelle verbundenen oder zu verbindenden Eingangsanschluss und einen mit dem zugeordneten Verbraucher elektrischer Energie verbundenen oder zu verbindenden Ausgangsanschluss auf.

Um über die Referenz-Diode einerseits dem jeweils zugeordneten Verbraucher elektrischer Energie einen Ruhestrom zuführen zu können, andererseits den an der Referenz-Diode auftretenden Spannungsabfall als Indikator für einen ansteigenden Strom nutzen zu können, wird vorgeschlagen, dass die Referenz-Diode in Durchlassrichtung zwischen den Eingangsanschluss und den Ausgangsanschluss geschaltet ist.

Vorzugsweise ist ein Emitter-Anschluss des Schalttransistors mit dem Eingangsanschluss verbunden oder/und ist ein Basisanschluss des Schalttransistors mit dem Ausgangsanschluss verbunden. Somit besteht die Möglichkeit, die Emitter-Basis-Strecke des Schalttransistors parallel zur Referenz-Diode zu schalten und damit den an der Referenz-Diode auftretenden Spannungsabfall als Emitter-Basis-Spannung abzugreifen.

Um bei konstruktiv einfacher Auslegung eine erhöhte Sicherheit bei Auftreten von potenziell kritischen Zuständen, beispielsweise eines Kurzschlusses, erreichen zu können, kann eine Sicherheitsschaltung vorgesehen sein, wobei die Eingangsanschlüsse aller Verbindungsschalter-Ansteuerschaltungen über die Sicherheitsschaltung mit der Gleichspannungsquelle verbunden oder zu verbinden sind. Die Sicherheitsschaltung ist dazu ausgebildet, den Strom von der Gleichspannungsquelle zu allen Verbrauchern elektrischer Energie der Mehrzahl von Verbrauchern elektrischer Energie zu überwachen und dann, wenn der Strom einen Schwellen-Strom übersteigt, die Verbindung zwischen der Gleichspannungsquelle und allen Verbrauchern elektrischer Energie der Mehrzahl von Verbrauchern elektrischer Energie zu unterbrechen. In einem voll funktionsfähigen Zustand fließt über die Sicherheitsschaltung ein Strom, welcher sich durch die Summe aller über die Verbindungsschalter-Ansteuerschaltungen zu den diesen zugeordneten Verbrauchern elektrischer Energie fließenden Ströme ergibt. Beispielsweise bei deaktiviertem Fahrzeug ergibt sich damit durch die Summe aller zu den Verbrauchern elektrischer Energie geleiteten Ruheströme ein vergleichsweise kleiner über die Sicherheitsschaltung fließender Gesamtstrom. Wird durch den Anstieg des Stroms über eine der Verbindungsschalter-Ansteuerschaltungen ein potenziell kritischer Zustand erkannt, deaktiviert die Sicherheitsschaltung alle Verbindungsschalter-Ansteuerschaltungen und schützt diese somit vor Überlastung.

Bei der erfindungsgemäß aufgebauten Verbindungsschaltung kann ferner eine beispielsweise als Mikroprozessor aufgebaute bzw. einen oder mehrere Mikroprozessoren umfassende Verbindungsschalter-Ansteuereinheit vorgesehen sein. Diese Verbindungsschalter-Ansteuereinheit ist dazu ausgebildet, bei Erzeugung des Schaltsignals durch wenigstens eine einem Verbraucher elektrischer Energie der Mehrzahl von Verbrauchern elektrischer Energie zugeordnete Verbindungsschalter-Ansteuerschaltung:
- alle Verbindungsschalter-Ansteuerschaltungen zu deaktivieren, oder/und
- wenigstens einen Teil der Verbindungsschalter, vorzugsweise alle Verbindungsschalter, in ihren Geschlossen-Zustand zu schalten.

Durch diese Maßnahmen können einerseits die Verbindungsschalter-Ansteuerschaltungen vor Überlastung geschützt werden. Andererseits wird durch das Schließen aller Verbindungsschalter ein Energieversorgungssystem beispielsweise in einem Fahrzeug in einen aktiven bzw. wachen Zustand versetzt, in welchem dann die verschiedenen Verbraucher elektrischer Energie über die diesen zugeordneten Verbindungsschalter mit der Gleichspannungsquelle verbunden sind und Überwachungsmaßnahmen bzw. Ansteuermaßnahmen eingeleitet bzw. durchgeführt werden können, um zu verifizieren, ob der vorliegende Zustand ein potenziell kritischer Zustand ist oder möglicherweise dadurch aufgetreten ist, dass ein sich selbst aktivierendes System, wie zum Beispiel eine Standheizung oder eine Alarmanlage in einem Fahrzeug, in Betrieb gegangen ist und dieser Betrieb auch fortgesetzt werden soll.

Beispielsweise kann die Verbindungsschalter-Ansteuereinheit dazu ausgebildet sein, zum Deaktivieren aller Verbindungsschalter-Ansteuerschaltungen die Sicherheitsschaltung in einen die Verbindung zwischen der Gleichspannungsquelle und allen Verbrauchern elektrischer Energie der Mehrzahl von Verbrauchern elektrischer Energie unterbrechenden Unterbrechungszustand zu schalten.

Zum Erhalt der erfindungsgemäß vorgesehenen Schaltfunktion bei einfach und kostengünstig zu realisierendem Aufbau kann bei einer jeweiligen Verbindungsschalter-Ansteuerschaltung der Schalttransistor ein Bipolartransistor sein.

Die Erfindung betrifft ferner ein Bordnetz für ein Fahrzeug, umfassend eine Gleichspannungsquelle und von der Gleichspannungsquelle mit elektrischer Energie zu speisende Verbraucher elektrischer Energie, wobei eine Mehrzahl der Verbraucher elektrischer Energie vermittels einer erfindungsgemäß aufgebauten Verbindungsschaltung mit der Gleichspannungsquelle verbunden oder verbindbar ist.

Die vorliegende Erfindung wird nachfolgend mit Bezug auf die beiliegenden Figuren detailliert beschrieben. Es zeigt:
- Fig. 1: in prinzipartiger Darstellung ein Schaltbild eines Bordnetzes in einem Fahrzeug mit einer Verbindungsschaltung;
- Fig. 2: ein Ausgestaltungsbeispiel einer Verbindungsschalter-Ansteuerschaltung;
- Fig. 3: ein weiteres Ausgestaltungsbeispiel einer Verbindungsschalter-Ansteuerschaltung;
- Fig. 4: ein weiteres Ausgestaltungsbeispiel einer Verbindungsschalter-Ansteuerschaltung;
- Fig. 5: ein weiteres Ausgestaltungsbeispiel einer Verbindungsschalter-Ansteuerschaltung;
- Fig. 6: ein Ausgestaltungsbeispiel einer Steuersignalschaltung;
- Fig. 7: ein Ausgestaltungsbeispiel einer Sicherheitsschaltung;
- Fig. 8: ein weiteres Ausgestaltungsbeispiel einer Sicherheitsschaltung;
- Fig. 9: ein weiteres Ausgestaltungsbeispiel einer Sicherheitsschaltung.

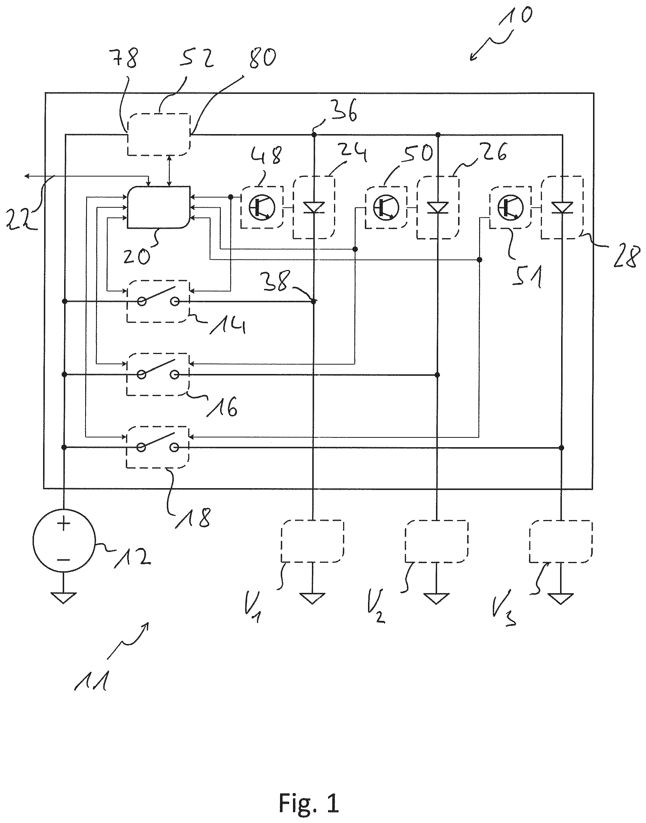

In Fig. 1 ist ein Schaltbild einer allgemein mit 10 bezeichneten Verbindungsschaltung in einem Bordnetz 11 eines Fahrzeugs dargestellt. Die Verbindungsschaltung 10 kann beispielsweise dazu genutzt werden, in einem Fahrzeug, insbesondere einem elektrisch betriebenen Fahrzeug, eine Mehrzahl von beispielsweise jeweils ein oder mehrere Steuergeräte umfassenden Verbrauchern elektrischer Energie V₁, V₂, V₃ mit einer Gleichspannungsquelle 12, beispielsweise Batterie oder Niederspannungsbordnetz, zu verbinden und somit mit elektrischer Energie zu versorgen.

Die Verbindungsschaltung 10 umfasst in Zuordnung zu jedem der Verbraucher V₁, V₂, V₃ einen Verbindungsschalter 14, 16, 18, über welche eine direkte Verbindung zwischen der Gleichspannungsquelle 12 und den jeweils zugeordneten Verbrauchern V₁, V₂, V₃ hergestellt werden kann. Die Verbindungsschalter 14, 16, 18 stehen grundsätzlich unter der Ansteuerung einer Verbindungsschalter-Ansteuereinheit 20, welche beispielsweise über einen Datenbus 22 in Verbindung mit einem Datensystem eines Fahrzeugs steht und auf diese Art und Weise entsprechend dem jeweils geforderten Betrieb in dem Fahrzeug einen oder mehrere der Verbindungsschalter 14, 16, 18 schließt und damit die Verbindung der Gleichspannungsquelle 12 mit dem jeweils zugeordneten Verbraucher V₁, V₂, V₃ herstellt.

Die Verbindungsschaltung 10 umfasst ferner in Zuordnung zu jedem der Verbraucher V₁, V₂, V₃ elektrischer Energie eine Verbindungsschalter-Ansteuerschaltung 24, 26, 28. Über die Verbindungsschalter-Ansteuerschaltungen 24, 26, 28 können die verschiedenen Verbraucher V₁, V₂, V₃ insbesondere in einem deaktivierten Zustand eines Fahrzeugs, in welchem auch die Verbindungsschalter-Ansteuereinheit 20 in einem deaktivierten Modus bzw. einem Schlafmodus sein kann, mit elektrischer Energie zu versorgen. Beispielsweise kann ein derartiger Verbraucher elektrischer Energie eine Alarmanlage eines Fahrzeugs sein, welche auch bei deaktiviertem Fahrzeug aktiv sein muss. Ein weiteres Beispiel für einen derartigen Verbraucher elektrischer Energie kann ein Fahrzeugheizgerät sein, welches beispielsweise in einem Standheizungsmodus betrieben werden kann bzw. in Betrieb gesetzt werden kann, um bei grundsätzlich deaktiviertem Fahrzeug einen Fahrzeuginnenraum vorzuwärmen.

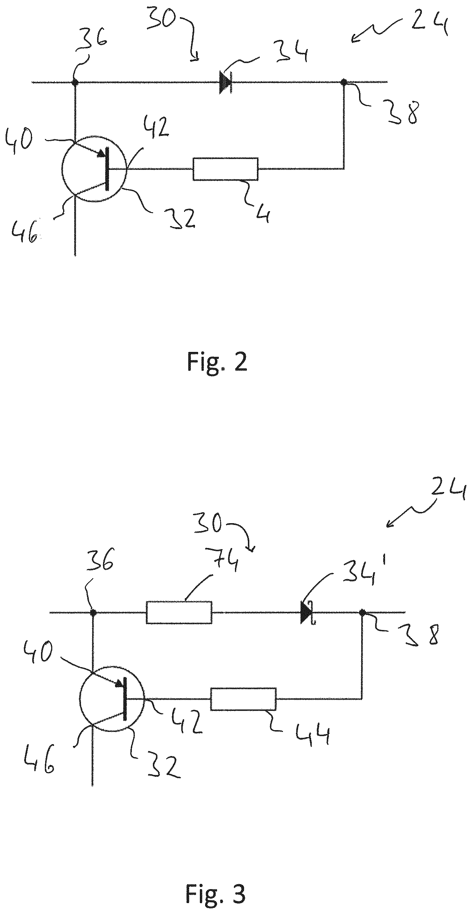

Jede der grundsätzlich gleich aufgebauten Verbindungsschalter-Ansteuerschaltungen umfasst, wie in dem Ausgestaltungsbeispiel der Fig. 2 anhand der Verbindungsschalter-Ansteuerschaltung 24 dargestellt, eine Diodenschaltung 30 und einen Schalttransistor 32. In dem in Fig. 2 dargestellten Ausgestaltungsbeispiel der Verbindungsschaltung 24 umfasst die Diodenschaltung 30 eine als pn-Diode ausgebildete Referenz-Diode 34, die in Durchlassrichtung zwischen einem Eingangsanschluss 36 und einem Ausgangsanschluss 38 der Verbindungsschalter-Ansteuerschaltung 24 geschaltet ist.

Ein Emitter-Anschluss 40 des als npn-Bipolartransistor ausgebildeten Schalttransistors 32 ist mit dem Eingangsanschluss 36 verbunden, und ein Basis-Anschluss 42 des Schalttransistors 32 ist über einen Widerstand 44 mit dem Ausgangsanschluss 38 der Verbindungsschalter-Ansteuerschaltung 24 verbunden. Ein Kollektor-Anschluss 46 des Schalttransistors 32 ist an eine nachfolgend noch erläuterte, Steuersignalschaltung 48 der Verbindungsschalter-Ansteuerschaltung 24 angeschlossen. Der Fig. 1 ist zu entnehmen, dass jeder Verbindungsschalter-Ansteuerschaltung einer derartige Steuersignalschaltung 48, 50 bzw. 51 zugeordnet ist, über welche ein an den jeweils zugeordneten Verbindungsschalter 14, 16, 18 und auch die Verbindungsschalter-Ansteuereinheit 20 abgegebenes Steuersignal erzeugt wird.

Der Fig. 2 ist weiter zu entnehmen, dass die Basis-Emitter-Strecke des Schalttransistors 32 zur Referenz-Diode 34 der Dioden-Schaltung 30 parallel geschaltet ist. Ein betriebsabhängig an der Referenz-Diode 34 in Vorwärtsrichtung auftretender Spannungsabfall wird somit über die Basis-Emitter-Strecke des Schalttransistors 32 abgegriffen, so dass dieser Spannungsabfall im Wesentlichen auch der Basis-Emitter-Spannung des Schalttransistors 32 entspricht. Bei ausreichend hohem Spannungsabfall an der Referenz-Diode 34 und dementsprechend ausreichend hoher Basis-Emitter-Spannung schaltet der Schalttransistor 32 in seinen leitenden Zustand, so dass die am Eingangsanschluss 36 der Verbindungsschalter-Ansteuerschaltung 24 anliegende elektrische Spannung über den dann leitend geschalteten Schalttransistor 32 als in die zugeordnete Steuersignalschaltung 48 eingegebenes Schaltsignal am Kollektor-Anschluss 46 des Schalttransistors 32 anliegt.

Der Fig. 1 ist zu entnehmen, dass der Eingangsanschluss 36 der Verbindungschalter-Ansteuerschaltung 24 und dementsprechend auch die Eingangsschlüsse der anderen Verbindungsschalter-Ansteuerschaltungen 26, 28 über eine nachfolgend noch erläuterte Sicherheitsschaltung 52 an die Gleichspannungsquelle 12 angeschlossen ist, so dass grundsätzlich das am Pluspol der Gleichspannungsquelle 12 entstehende Potenzial an allen Eingangsanschlüssen der Verbindungsschalter-Ansteuerschaltungen 24, 26, 28 anliegt und bei jeweils leitend geschaltetem Schalttransistor 32 als Schaltsignal an dessen Kollektor-Anschluss 46 anliegt.

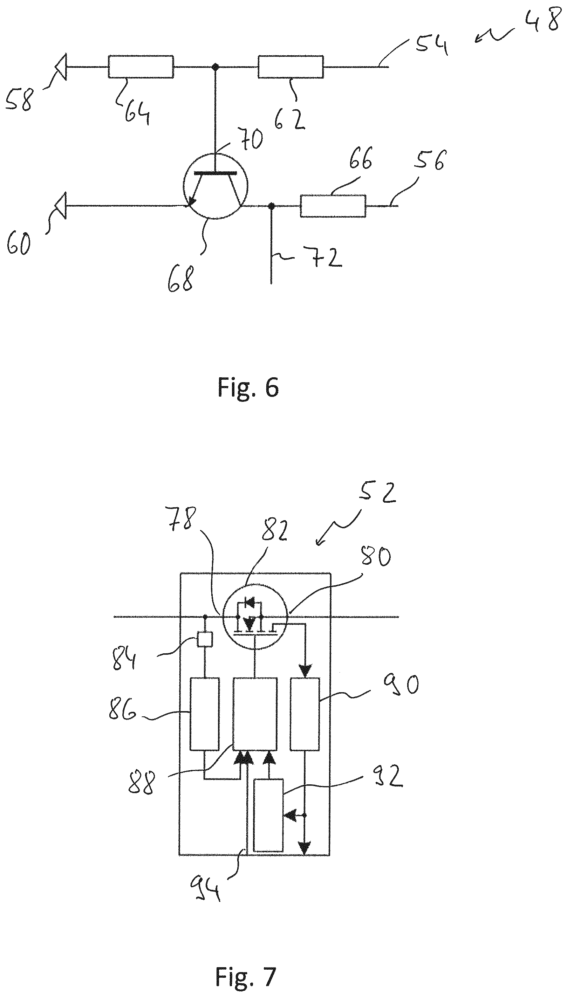

Die Fig. 6 veranschaulicht anhand der der Verbindungsschalter-Ansteuerschaltung 24 zugeordneten Steuersignalschaltung 48 ein Ausgestaltungsbeispiel einer derartigen Steuersignalschaltung 48. Die Steuersignalschaltung 48 umfasst zwei Spannungsanschlüsse 54, 56 sowie zwei Masseanschlüsse 58, 60. Der Spannungsanschluss 54 ist mit dem Kollektor-Anschluss 46 des Schalttransistors 32 verbunden und empfängt somit das am Schalttransistor 32 generierte Schaltsignal bei leitend geschalteter Emitter-Kollektor-Strecke des Schalttransistors 32. Der Spannungsanschluss 54 ist über zwei in Serie geschaltete Widerstände 62, 64 mit dem Masseanschluss 58 verbunden. Der Spannungsanschluss 56 ist in Verbindung mit einer Referenzspannung, die beispielsweise durch Teilung der am Pluspol der Gleichspannungsquelle 12 anliegenden Spannung erzeugt wird und beispielsweise im Bereich von 3,5V bis 5V liegen kann. Der Spannungsanschluss 56 ist über einen Widerstand 66 und einen als pnp-Bipolartransistor ausgebildeten Steuertransistor 68 bzw. dessen Kollektor-Emitter-Strecke mit dem Masseanschluss 60 verbunden.

Ein Basis-Anschluss 70 des Steuertransistors 68 ist zwischen die beiden Widerstände 62, 64 geschaltet und greift daher eine entsprechend dem Verhältnis dieser Widerstände geteilte Spannung zwischen diesen beiden Widerständen ab, wenn das Schaltsignal am Spannungsanschluss 54 anliegt. Ist dies der Fall, liegt eine dem Spannungsabfall am Widerstand 64 entsprechende Spannung an der Basis-Emitter-Strecke des Steuertransistors 68 an und schaltet diesen leitend. Der Übergang zwischen einem leitenden und einem nicht leitenden Zustand der Kollektor-Emitter-Strecke des Steuertransistors 68 führt zu einer Veränderung des an einem Steuersignalanschluss 72 generierten Potenzials, und dieser Übergang wird am Steuersignalanschluss 72 als Steuersignal aus der Steuersignalschaltung 48 ausgegeben und an den zugeordneten Verbindungsschalter 14 angelegt.

Bei ausreichend hohem Spannungsabfall an der Referenzdiode 34 und daher entsprechend hoher Basis-Emitter-Spannung am Schalttransistor 42 wird am Kollektor-Anschluss 46 des Schalttransistors 32 das an den Spannungsanschluss 54 angelegte Schaltsignal erzeugt, welches wiederum den Steuertransistor 68 leitend schaltet und somit zur Erzeugung des durch eine Veränderung des Spannungspegels am Steuersignalanschluss 72 generierten Steuersignals führt. Das am Steuersignalanschluss 72 generierte Steuersignal wiederum wird dem Verbindungsschalter 14 zugeführt und schaltet diesen leitend. Ebenso wird dieses Steuersignal der Verbindungsschalter-Ansteuereinheit 20 zugeführt und in nachfolgend noch beschriebener Art und Weise genutzt.

Bei an den Eingangsanschlüssen der verschiedenen Verbindungsschalter Ansteuerschaltungen 24, 26, 28 anliegender, durch die Gleichspannungsquelle 12 generierter Spannung liegt an den Referenz-Dioden 34 der verschiedenen Verbindungsschalter-Ansteuerschaltungen 24, 26, 28 grundsätzlich eine Vorwärtsspannung an, welche die Schwellenspannung der Referenz-Dioden 34 der Verbindungsschalter-Ansteuerschaltungen 24, 26, 28 übersteigt. Dies bedeutet, dass über die Referenz-Dioden 34 ein Stromfluss zu den jeweiligen Verbrauchern V₁, V₂, V₃ möglich ist und diese somit in einem Ruhezustand mit elektrischer Energie versorgt werden können. In diesem Ruhezustand fließt über die Verbindungsschalter-Ansteuerschaltungen 24, 26, 28 jeweils nur ein vergleichsweise kleiner Ruhestrom im Bereich von einigen 10 mA. In diesem Zustand sind die Verbindungsschalter 14, 16, 18 in ihrem offenen, nicht leitenden Zustand.

Entsteht bei einem der Verbraucher V₁, V₂, V₃, beispielsweise dem Verbraucher V₁, ein erhöhter Energiebedarf, führt dies zu einem stärkeren Stromfluss über die diesem zugeordnete Verbindungsschalter-Ansteuerschaltung 24 bzw. deren Referenz-Diode 34. Die Folge eines höheren Stromflusses über die Referenz-Diode 34 ist ein entsprechend erhöhter Spannungsabfall an der Referenz-Diode 34. Dieser erhöhte Spannungsabfall an der Referenz-Diode 34 führt zu einer entsprechend erhöhten Basis-Emitter-Spannung des Schalttransistors 32. Bei ausreichend hohem Spannungsabfall an der Referenz-Diode 34 und dementsprechend ausreichend hoher Basis-Emitter-Spannung am Schalttransistor 32 wird dessen Emitter-Kollektor-Strecke leitend geschaltet und dadurch am Kollektor-Anschluss 46 das Schaltsignal erzeugt.

Wie vorangehend beschrieben, hat die Erzeugung des Schaltsignals zur Folge, dass durch die Steuersignalschaltung 48 das auch dem Verbindungsschalter 14 zugeführte Steuersignal erzeugt wird und dadurch der Verbindungsschalter 14 in seinen leitenden Zustand gebracht wird. Infolge des Schließens des Verbindungsschalters 14 wird aufgrund des geringen elektrischen Widerstands desselben praktisch der gesamte dem Verbraucher V₁ zugeführte elektrische Strom über der Verbindungsschalter 14 geleitet. Die Verbindungsschalter-Ansteuerschaltung bzw. deren Referenz-Diode 34 wird dadurch entlastet und eine Überlastung derselben ausgeschlossen.

Da mit dem Schließen des Verbindungsschalters 14 auch der Spannungsabfall zwischen dem Eingangsanschluss 36 und dem Ausgangsanschluss 38 der Verbindungsschalter-Ansteuerschaltung 24 abnimmt und dementsprechend der Spannungsabfall an der Referenz-Diode 34 und mit diesem auch die Basis-Emitter-Spannung am Schalttransistor 32 abnimmt, wird das Ausgeben des Schaltsignals und damit das Ausgeben des Steuersignals beendet. Dies hat jedoch nicht zur Folge, dass der Verbindungsschalter 14 wieder in seinen nicht leitenden, offenen Zustand übergeht. Da das von der Steuersignalschaltung 48 generierte Steuersignal auch der Verbindungsschalter-Ansteuereinheit 20 zugeführt wird, übernimmt diese ab dem Zeitpunkt, in welchem dieser ein Steuersignal von zumindest einer der Verbindungsschalter-Ansteuerschaltungen 24, 26, 28 zugeführt wird, auch bei deaktiviertem Fahrzeug die Ansteuerung der Verbindungsschalter 14, 16, 18 und auch der Sicherheitsschaltung 52.

Durch die Ansteuerung der Sicherheitsschaltung 52 vermittels der Verbindungsschalter-Ansteuereinheit 20 wird die Verbindung der Eingangsanschlüsse der Verbindungsschalter-Ansteuerschaltungen 24, 26, 28 mit der Gleichspannungsquelle 12 unterbrochen, unabhängig davon, ob nur eine einzige Verbindungsschalter-Ansteuerschaltung 24, 26, 28 ein Schaltsignal erzeugt hat, oder ob mehrere der Verbindungsschalter-Ansteuerschaltungen 24, 26, 28 im Wesentlichen gleichzeitig ein Schaltsignal erzeugt haben und dementsprechend die zugeordneten Verbindungsschalter 14, 16 bzw. 18 in ihren leitenden Zustand geschaltet wurden. Um gleichzeitig aber die verschiedenen Verbraucher V₁, V₂, V₃ mit elektrischer Energie versorgen zu können, steuert die Verbindungsschalter-Ansteuereinheit 20 alle den verschiedenen Verbindungsschalter-Ansteuerschaltungen 24, 26, 28 zugeordneten Verbindungsschalter 14, 16, 18 derart an, dass diese in ihren leitenden, geschlossenen Zustand übergehen bzw. in diesem Zustand verbleiben, sofern zuvor ein Schaltsignal bzw. ein Steuersignal erzeugt wurde.

Mit der vorangehend beschriebenen Verbindungsschaltung ist es möglich, bei deaktiviertem Fahrzeug den verschiedenen Verbrauchern V₁, V₂, V₃ elektrischer Energie einen Ruhestrom über die jeweiligen Verbindungsschalter-Ansteuerschaltungen 24, 26, 28 zuzuführen, ohne eine diese Zufuhr ermöglichende Ansteuerspannung an die Verbindungsschalter-Ansteuerschaltungen 24, 26, 28 anlegen zu müssen. Dies bedeutet, dass in den einzelnen Verbindungsschalter-Ansteuerschaltungen 24, 26, 28 kein Betriebsstrom fließt und diese im Wesentlichen ohne Energieverbrauch die Zufuhr elektrischer Energie zu den verschiedenen Verbrauchern V₁, V₂, V₃ ermöglichen. Erst dann, wenn beabsichtigt oder ggf. auch aufgrund eines undefinierten Zustands oder eines Defektzustands die Zufuhr elektrischer Energie zu einem oder mehreren der Verbraucher V₁, V₂, V₃ ein Ausmaß erreicht bzw. übersteigt, welches zu einer Schädigung der Verbindungsschalter-Ansteuerschaltungen 24, 26 bzw. 28 oder/und einer Entladung der Gleichspannungsquelle 12 oder/und einer Entladung der Gleichspannungsquelle 12 führen könnte, erfolgt nach einem innerhalb weniger Nanosekunden durchgeführten Schaltprozess die Stromzufuhr über die Verbindungsschalter 14, 16, 18. In diesem durch die Verbindungsschalter-Ansteuereinheit 20 dann geführten Zustand kann überprüft werden, ob die höhere Lastanforderung im Bereich von einem oder mehreren der Verbraucher V₁, V₂, V₃ im Zusammenhang mit einem korrekten Betrieb entstanden ist, beispielsweise weil eine Standheizung in Betrieb gegangen ist, oder ob ggf. ein undefinierter Zustand oder ein beispielsweise durch einen Kurzschluss herbeigeführter Fehlerzustand vorliegt und weitere Sicherheitsmaßnahmen zu ergreifen sind.

Die Fig. 3 zeigt wieder anhand der Verbindungsschalter-Ansteuerschaltung 24 eine alternative Ausgestaltung einer derartigen Verbindungsschalter-Ansteuerschaltung. Bei dieser Ausgestaltung ist die Referenzdiode 34' als Schottky-Diode ausgebildet und zwischen dem Eingangsanschluss 32 und dem Ausgangsanschluss 38 in Serie zu einem Widerstand 74 geschaltet. Eine derartige Schottky-Diode 34' zeichnet sich dadurch aus, dass sie eine deutlich niedrigere Schwellenspannung aufweist, als eine pn-Diode. Da bei einer Schottky-Diode auch der abhängig vom Stromfluss sich einstellende Spannungsabfall geringer ist, als bei einer pn-Diode, ist es zum Erhalt eines ausreichend hohen Spannungsabfalls zwischen dem Eingangsanschluss 36 und dem Ausgangsanschluss 38 erforderlich, diese Serienschaltung aus elektrischem Widerstand 74 und Referenz-Diode 34' bereitzustellen.

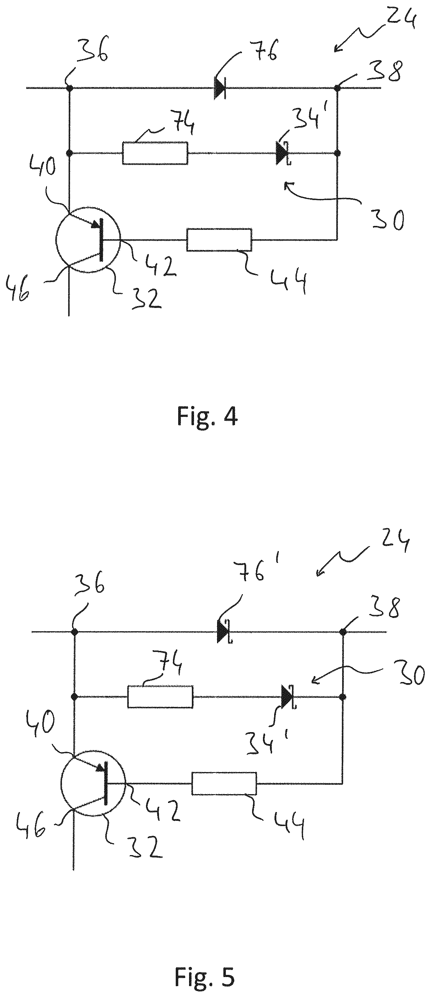

Eine weitere alternative Ausgestaltungsform einer derartigen Verbindungsschalter-Ansteuerschaltung 24 ist in Fig. 4 dargestellt. Bei dieser Ausgestaltungsform ist die Referenz-Diode 34' wiederum als Schottky-Diode ausgebildet und zwischen dem Eingangsanschluss 36 und dem Ausgangsanschluss 38 in Serie zu dem Widerstand 74 geschaltet. Parallel zur Referenzdiode 34' ist eine als pn-Diode ausgebildete Last-Diode 76 geschaltet. Bei ansteigender Lastanforderung wird durch die geringere Schwellenspannung der Referenz-Diode 34' zunächst diese in ihren leitenden Zustand übergehen. Erst bei weiter ansteigendem Strom geht auch die eine höhere Schwellenspannung aufweisende Last-Diode 76 in ihren leitenden Zustand über, so dass der größere Teil des elektrischen Stroms zu dem Verbraucher V₁ dann über die Last-Diode 76 fließen kann und somit die Referenz-Diode 34' entlastet wird. Eine derartige Ausgestaltung ist insbesondere dann vorteilhaft, wenn bei höherer Lastanforderung das Auftreten von Pulsströmen, also kurzzeitigen vergleichsweise hohen Strömen, zu erwarten ist, welche dann im Wesentlichen über die Last-Diode 76 geführt werden können, bevor der zugeordnete Verbindungsschalter in den leitenden Zustand übergeht.

Bei der in der Fig. 5 dargestellten Ausgestaltungsform ist sowohl die Referenz-Diode 34', als auch die Last-Diode 76' als Schottky-Diode ausgebildet.

Es ist darauf hinzuweisen, dass bei den verschiedenen dargestellten Ausgestaltungen einer derartigen Verbindungsschalter-Ansteuerschaltung die verschiedenen elektrischen Komponenten derselben, insbesondere die verschiedenen Dioden, auch abhängig von dem in Verbindung mit einem jeweiligen Verbraucher elektrischer Energie zu erwartenden Ruhestrom bzw. dem ggf. zu erwartenden Laststrom dimensioniert werden können. Insbesondere bei den in den Fig. 3 bis 5 dargestellten Ausgestaltungsformen kann anstelle der als Schottky-Dioden ausgebildeten Referenzdioden 34' auch jeweils eine Germanium-Diode genutzt werden, welche eine ähnlich niedrige Schwellenspannung aufweisen, wie Schottky-Dioden.

In Fig. 7 ist ein Ausgestaltungsbeispiel einer hoch integrierten Sicherheitsschaltung 52 dargestellt. Die Sicherheitsschaltung 52 ist mit einem Eingangsanschluss 78 derselben bzw. eines Trennelements 82 an die Gleichspannungsquelle 12 bzw. deren Pluspol angeschlossen. Ein Ausgangsanschluss 80 der Sicherheitsschaltung 52 bzw. des Trennelements 82 ist mit den Eingangsanschlüssen der verschiedenen Verbindungsschalter-Ansteuerschaltungen 24, 26, 28 verbunden. Die Sicherheitsschaltung 52 weist ein im dargestellten Ausgestaltungsbeispiel als Trennelement 82 einen MOSFET auf, welcher grundsätzlich in seinem leitenden Zustand ist bzw. gehalten wird, um zwischen dem Eingangsanschluss 78 und dem Ausgangsanschluss 80 eine leitende Verbindung herzustellen bzw. aufrecht zu erhalten und dadurch die Gleichspannungsquelle 12 mit den verschiedenen Verbrauchern V₁, V₂, V₃ über die diesen jeweils zugeordneten Verbindungsschalter-Ansteuerschaltungen 24, 26, 28 zu verbinden.

Die Sicherheitsschaltung 52 umfasst einen Temperatursensor 84, dessen die Temperatur im Bereich der Sicherheitsschaltung 52 repräsentierendes Temperatursignal in eine Übertemperaturschaltung 86 eingegeben wird. Bei Übersteigen einer potentiell kritischen Temperatur kann die Übertemperaturschaltung 86 ein entsprechendes Ansteuersignal an eine Gate-Steuerschaltung 88 ausgeben, welche dann das Schaltelement 82 in seinen nicht leitenden Zustand schaltet.

Die Sicherheitsschaltung 52 kann ferner eine Stromerfassungsschaltung 90 umfassen, welche den über das Trennelement 82 fließenden Strom erfassen kann und ein entsprechendes Signal in eine Überstromschaltung 92 einleiten kann. Übersteigt der zwischen dem Eingangsanschluss 78 und dem Ausgangsanschluss 80 fließende elektrische Strom einen vorbestimmten Schwellenstrom, kann die Überstromschaltung 92 der Gate-Steuerschaltung 88 ein entsprechendes Ansteuersignal zuführen, so dass diese das Trennelement 82 nach Art einer Sicherung in seinen nicht leitenden Zustand schaltet. Ein die Größe des elektrischen Stroms indizierendes Signal kann beispielsweise auch der Verbindungsschalter-Ansteuereinheit 20 zugeführt werden. Diese wiederum führt über einen Steueranschluss 94 der Sicherheitsschaltung 52 ein das Trennelement 82 in seinen offenen, nicht leitenden Zustand schaltendes Signal zu, wenn von einer der Verbindungsschalter-Ansteuerschaltungen 24, 26, 28 ein Schaltsignal und dementsprechend ein zugeordnetes Steuersignal erzeugt wird. Auf diese Art und Weise werden, wie vorangehend bereits dargestellt, bei Auftreten eines einzigen Schaltsignals bzw. Steuersignals alle Verbindungsschalter-Ansteuerschaltungen 24, 26, 28 von der Gleichspannungsquelle 12 getrennt, und die Versorgung der verschiedenen Verbraucher V₁, V₂, V₃ wird über die diesen jeweils zugeordneten Verbindungsschalter 14, 16, 18 sichergestellt.

Um in einem Zustand, in welchem möglicherweise bei zumindest einem der Verbraucher V₁, V₂, V₃ ein zu einem Kurzschluss führender Defekt aufgetreten ist, zu verhindern, dass über den zugeordneten Verbindungsschalter 14, 16 bzw. 18 ein übermäßig hoher Strom fließt, welcher auch zu einer Überlastung der Gleichspannungsquelle 12 führen könnte, kann jeder der Verbindungsschalter 14, 16, 18 in einer Art und Weise ausgebildet sein, wie dies vorangehend mit Bezug auf die Sicherheitsschaltung 52 beschrieben wurde. Das heißt, auch die Verbindungsschalter 14, 16, 18 können so aufgebaut sein, dass sie insbesondere bei Auftreten übermäßig hoher Ströme nach Art einer Sicherung wirken und den Stromfluss zu einem jeweiligen Verbraucher unterbrechen, wenn dieser eine zugeordnete Schwelle übersteigt.

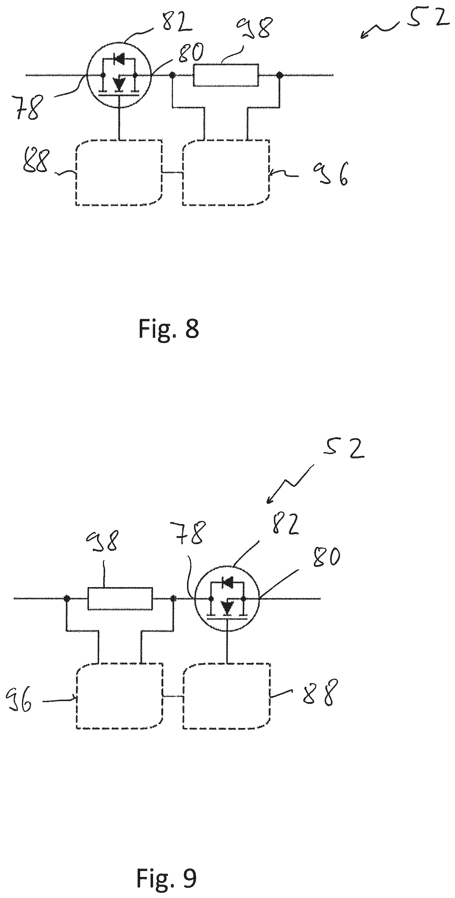

Die Fig. 8 und 9 zeigen weitere Ausgestaltungsvarianten einer derartigen Sicherheitsschaltung 52. Die in Fig. 8 dargestellte Sicherheitsschaltung 52 umfasst wiederum ein als MOSFET ausgebildetes Trennelement 82 und in Serie dazu eine allgemein mit 96 bezeichnete Stromerfassungsschaltung beispielsweise mit einem zum Trennelement 82 seriell geschalteten Widerstand 98. Die Stromerfassungsschaltung 98 kann den Stromfluss von der Gleichspannungsquelle 12 zu den Verbindungsschalter-Ansteuerschaltungen 24, 26, 28 erfassen und bei übermäßig hohem Stromfluss bzw. Überschreiten einer Stromschwelle ein entsprechendes Ansteuersignal in die Gate-Steuerschaltung 88 einleiten, welche dann das Trennelement 82 in seinen nicht leitenden Zustand schalten kann. Während bei der in Fig. 8 dargestellten Ausgestaltung die Stromerfassungsschaltung 96 in Stromflussrichtung nach dem Trennelement 82, also in Verbindung mit dessen Ausgangsanschluss 80 vorgesehen ist, ist bei der in Fig. 9 dargestellten Schaltung die Stromerfassungsschaltung 96 in Stromflussrichtung vor dem Trennelement 82 positioniert und somit in Verbindung mit dessen Eingangsanschluss 78, wobei jedoch die gleiche Funktionalität zur Erfassung des über das Trennelement 82 zu den Verbindungsschalter-Ansteuerschaltungen 24, 26, 28 fließenden elektrischen Stroms und des Erzeugens eines Ansteuersignals für die Gate-Steuerschaltung 88 bei übermäßig hohem Strom vorhanden ist.

## Patentansprüche

1. Verbindungsschaltung zur Verbindung einer Mehrzahl von Verbrauchern (V₁, V₂, V₃) elektrischer Energie, vorzugsweise in einem Fahrzeug, mit einer Gleichspannungsquelle (12), umfassend:
- in Zuordnung zu jedem Verbraucher (V₁, V₂, V₃) elektrischer Energie einer Mehrzahl von Verbrauchern (V₁, V₂, V₃) elektrischer Energie, jeweils einen Verbindungsschalter (14, 16, 18) zum Herstellen einer Verbindung des Verbrauchers (V₁, V₂, V₃) elektrischer Energie mit einer Gleichspannungsquelle (12),
- in Zuordnung zu jedem der Verbraucher (V₁, V₂, V₃) elektrischer Energie der Mehrzahl von Verbrauchern (V₁, V₂, V₃) elektrischer Energie, jeweils eine Verbindungsschalter-Ansteuerschaltung (24, 26, 28) zur Zufuhr eines Stroms zu dem jeweiligen Verbraucher (V₁, V₂, V₃) elektrischer Energie und zum Ansteuern des dem jeweiligen Verbraucher (V₁, V₂, V₃) elektrischer Energie zugeordneten Verbindungsschalters (14, 16, 18) zum Herstellen der Verbindung des jeweiligen Verbrauchers (V₁, V₂, V₃) elektrischer Energie mit der Gleichspannungsquelle (24, 26, 28),
wobei die Verbindungschalter-Ansteuerschaltung einen Schalttransistor (32) umfasst, wobei eine Basis-Emitter-Spannung des Schalttransistors (32) von dem dem jeweils zugeordneten Verbraucher elektrischer Energie über die Verbindungschalter-Ansteuerschaltung (24, 26, 28) zugeführten Strom abhängig ist, und wobei bei eine Schwellen-Spannung übersteigender Basis-Emitter-Spannung an einem Kollektor-Anschluss (46) des Schalttransistors (32) ein Schaltsignal zum Schalten des jeweils zugeordneten Verbindungsschalters (14, 16, 18) in einen eine Verbindung des jeweils zugeordneten Verbrauchers (V₁, V₂, V₃) elektrischer Energie mit der Gleichspannungsquelle (12) herstellenden Geschlossen-Zustand erzeugt wird.

2. Verbindungsschaltung nach Anspruch 1, **dadurch gekennzeichnet, dass** die Verbindungsschalter-Ansteuerschaltung (24, 26, 28) eine Dioden-Schaltung (30) umfasst, wobei die Basis-Emitter-Spannung des Schalttransistors (32) im Zusammenhang mit einem Spannungsabfall an einer Referenz-Diode (34; 34') der Dioden-Schaltung (30) steht.

3. Verbindungsschaltung nach Anspruch 2, **dadurch gekennzeichnet, dass** die Basis-Emitter-Spannung im Wesentlichen einem Spannungsabfall an der Referenz-Diode (34) entspricht.

4. Verbindungsschaltung nach Anspruch 3, **dadurch gekennzeichnet, dass** die Referenz-Diode (34) eine pn-Diode, vorzugsweise Silizium-Diode, ist.

5. Verbindungsschaltung nach Anspruch 2, **dadurch gekennzeichnet, dass** die Dioden-Schaltung (30) wenigstens einen zu der Referenz-Diode (34') in Serie geschalteten elektrischen Widerstand (74) umfasst, und dass die Basis-Emitter-Spannung im Wesentlichen einem Spannungsabfall an der Serienschaltung aus Referenz-Diode (34') und wenigstens einem elektrischem Widerstand (74) entspricht.

6. Verbindungsschaltung nach Anspruch 5, **dadurch gekennzeichnet, dass** die Referenz-Diode (34') eine Schottky-Diode oder Germanium-Diode ist.

7. Verbindungsschaltung nach einem der Ansprüche 2-6, **dadurch gekennzeichnet, dass** die Dioden-Schaltung (30) eine zu der Referenz-Diode (34') parallel geschaltete Last-Diode (76; 76') umfasst.

8. Verbindungsschaltung nach Anspruch 7, **dadurch gekennzeichnet, dass** eine Schwellenspannung der Last-Diode (76) größer ist, als eine Schwellenspannung der Referenz-Diode (34').

9. Verbindungsschaltung nach einem der Ansprüche 1-8, **dadurch gekennzeichnet, dass** die Verbindungsschalter-Ansteuerschaltung (24, 26, 28) eine Steuersignalschaltung (48, 50, 51) umfasst, wobei die Steuersignalschaltung (48, 50, 51) dazu ausgebildet ist, bei am Kollektor-Anschluss (46) der Verbindungschalter-Ansteuerschaltung (24, 26, 28) erzeugtem Schaltsignal ein an den zugeordneten Verbindungsschalter (14, 16, 18) anzulegendes Steuersignal zum Schalten des Verbindungsschalters (14, 16, 18) in seinen Geschlossen-Zustand zu erzeugen.

10. Verbindungsschaltung nach einem der Ansprüche 1-9, **dadurch gekennzeichnet, dass** die Verbindungsschalter-Ansteuerschaltung (24, 26, 28) einen mit der Gleichspannungsquelle (12) verbundenen oder zu verbindenden Eingangsanschluss (36) und einen mit dem zugeordneten Verbraucher (V₁, V₂, V₃) elektrischer Energie verbundenen oder zu verbindenden Ausgangsanschluss (38) umfasst.

11. Verbindungsschaltung nach Anspruch 2 und Anspruch 10, **dadurch gekennzeichnet, dass** die Referenz-Diode (34; 34') in Durchlassrichtung zwischen den Eingangsanschluss (36) und den Ausgangsanschluss (38) geschaltet ist.

12. Verbindungsschaltung nach Anspruch 10 oder 11, **dadurch gekennzeichnet, dass** ein Emitter-Anschluss (40) des Schalttransistors (2) mit dem Eingangsanschluss (36) verbunden ist, oder/und dass ein Basisanschluss (42) des Schalttransistors (32) mit dem Ausgangsanschluss (38) verbunden ist.

13. Verbindungsschaltung nach einem der Ansprüche 10-12, **dadurch gekennzeichnet, dass** eine Sicherheitsschaltung (52) vorgesehen ist, wobei die Eingangsanschlüsse (32) aller Verbindungsschalter-Ansteuerschaltungen (24, 26, 28) über die Sicherheitsschaltung (52) mit der Gleichspannungsquelle (12) verbunden oder zu verbinden sind, wobei die Sicherheitsschaltung (52) dazu ausgebildet ist, den Strom von der Gleichspannungsquelle (12) zu allen Verbrauchern (V₁, V₂, V₃) elektrischer Energie der Mehrzahl von Verbrauchern (V₁, V₂, V₃) elektrischer Energie zu überwachen und dann, wenn der Strom einen Schwellen-Strom übersteigt, die Verbindung zwischen der Gleichspannungsquelle (12) und allen Verbrauchern (V₁, V₂, V₃) elektrischer Energie der Mehrzahl von Verbrauchern (V₁, V₂, V₃) elektrischer Energie zu unterbrechen.

14. Verbindungsschaltung nach einem der Ansprüche 1-13, **dadurch gekennzeichnet, dass** eine Verbindungsschalter-Ansteuereinheit (20) vorgesehen ist, wobei die Verbindungsschalter-Ansteuereinheit (20) dazu ausgebildet ist, bei Erzeugung des Schaltsignals durch wenigstens eine einem Verbraucher (V₁, V₂, V₃) elektrischer Energie der Mehrzahl von Verbrauchern (V₁, V₂, V₃) elektrischer Energie zugeordnete Verbindungsschalter-Ansteuerschaltung (24, 26, 28):
- alle Verbindungsschalter-Ansteuerschaltungen (24, 26, 28) zu deaktivieren,
oder/und
- wenigstens einen Teil der Verbindungsschalter (14, 16, 18), vorzugsweise alle Verbindungsschalter (14, 16, 18), in ihren Geschlossen-Zustand zu schalten.

15. Verbindungsschaltung nach Anspruch 13 und Anspruch 14, **dadurch gekennzeichnet, dass** die Verbindungsschalter-Ansteuereinheit (20) dazu ausgebildet ist, zum Deaktivieren aller Verbindungsschalter-Ansteuerschaltungen (24, 26, 28) die Sicherheitsschaltung (52) in einen die Verbindung zwischen der Gleichspannungsquelle (12) und allen Verbrauchern (V₁, V₂, V₃) elektrischer Energie der Mehrzahl von Verbrauchern (V₁, V₂, V₃) elektrischer Energie unterbrechenden Unterbrechungszustand zu schalten.

16. Verbindungsschaltung nach einem der Ansprüche 1-15, **dadurch gekennzeichnet, dass** der Schalttransistor (32) ein Bipolartransistor ist.

17. Bordnetz für ein Fahrzeug, umfassend eine Gleichspannungsquelle (12) und von der Gleichspannungsquelle (12) mit elektrischer Energie zu speisende Verbraucher (V₁, V₂, V₃) elektrischer Energie, wobei eine Mehrzahl der Verbraucher (V₁, V₂, V₃) elektrischer Energie vermittels einer Verbindungsschaltung (10) nach einem der Ansprüche 1-16 mit der Gleichspannungsquelle (12) verbunden oder verbindbar ist.

## Claims

1. A connection circuit for connecting a plurality of consumers (V₁, V₂, V₃) of electrical energy, preferably in a vehicle, to a direct current source (12), having:
- associated with each consumer (V₁, V₂, V₃) of electrical energy of a plurality of consumers (V₁, V₂, V₃) of electrical energy, one connection switch (14, 16, 18) each for establishing a connection between the consumer (V₁, V₂, V₃) of electrical energy and a direct current source (12),
- associated with each of the consumers (V₁, V₂, V₃) of electrical energy of the plurality of consumers (V₁, V₂, V₃) of electrical energy, a connection switch activation circuit (24, 26, 28) each for supplying a current to the respective consumer (V₁, V₂, V₃) of electrical energy and for activating the connection switch (14, 16, 18) associated with the respective consumer (V₁, V₂, V₃) of electrical energy in order to establish the connection between the respective consumer (V₁, V₂, V₃) of electrical energy and the direct current source (24, 26, 28),
wherein the connection switch activation circuit includes a switching transistor (32), wherein a base-emitter voltage of the switching transistor (32) depends on the current supplied to the associated consumer of electrical energy via the connection switch activation circuit (24, 26, 28), and wherein, if a base-emitter voltage at a collector terminal (46) of the switching transistor (32) exceeds a threshold voltage, a switch signal is generated for switching the associated connection switch (14, 16, 18) into a closed state that establishes a connection between the associated consumer (V₁, V₂, V₃) of electrical energy and the direct current source (12).

2. The connection circuit as claimed in claim 1, **characterized in that** the connection switch activation circuit (24, 26, 28) includes a diode circuit (30), wherein the base-emitter voltage of the switching transistor (32) is related to a voltage drop at a reference diode (34; 34') in the diode circuit (30).

3. The connection circuit as claimed in claim 2, **characterized in that** the base-emitter voltage substantially corresponds to a voltage drop at the reference diode (34).

4. The connection circuit as claimed in claim 3, **characterized in that** the reference diode (34) is a p-n diode, preferably a silicon diode.

5. The connection circuit as claimed in claim 2, **characterized in that** the diode circuit (30) has at least one electrical resistor (74) connected in series with the reference diode (34'), and that the base-emitter voltage substantially corresponds to a voltage drop at the series connection of the reference diode (34') and at least one electrical resistor (74).

6. The connection circuit as claimed in claim 5, **characterized in that** the reference diode (34') is a Schottky diode or a germanium diode.

7. The connection circuit as claimed in one of claims 2 to 6, **characterized in that** the diode circuit (30) has a load diode (76; 76') connected in parallel to the reference diode (34').

8. The connection circuit as claimed in claim 7, **characterized in that** a threshold voltage of the load diode (76) is higher than a threshold voltage of the reference diode (34').

9. The connection circuit as claimed in one of claims 1 to 8, **characterized in that** the connection switch activation circuit (24, 26, 28) has a control signal circuit (48, 50, 51), wherein the control signal circuit (48, 50, 51) is designed to generate, when a switch signal has been generated at the collector terminal (46) of the connection switch activation circuit (24, 26, 28), a control signal to be applied at the associated connection switch (14, 16, 18) for switching the connection switch (14, 16, 18) into the closed state thereof.

10. The connection switch as claimed in one of claims 1 to 9, **characterized in that** the connection switch activation circuit (24, 26, 28) has an input terminal (36) which is connected or is to be connected to the direct current source (12), and an output terminal (38) which is connected or is to be connected to the associated consumer (V₁, V₂, V₃) of electrical energy.

11. The connection circuit as claimed in claim 2 and claim 10, **characterized in that** the reference diode (34; 34') is connected in the forward direction between the input terminal (36) and the output terminal (38).

12. The connection circuit as claimed in claim 10 or 11, **characterized in that** an emitter terminal (40) of the switching transistor (2) is connected to the input terminal (36), or/and that a base terminal (42) of the switching transistor (32) is connected to the output terminal (38).

13. The connection circuit as claimed in one of claims 10 to 12, **characterized in that** a safety circuit (52) is provided, wherein the input terminals (32) of all connection switch activation circuits (24, 26, 28) are connected or are to be connected via the safety circuit (52) to the direct current source (12), wherein the safety circuit (52) is designed to monitor the current from the direct current source (12) to all consumers (V₁, V₂, V₃) of electrical energy of the plurality of consumers (V₁, V₂, V₃) of electrical energy and, for the case in which the current exceeds a threshold current, to interrupt the connection between the direct current source (12) and all consumers (V₁, V₂, V₃) of electrical energy of the plurality of consumers (V₁, V₂, V₃) of electrical energy.

14. The connection circuit as claimed in one of claims 1 to 13, **characterized in that** a connection circuit activation unit (20) is provided, wherein the connection circuit activation unit (20), when the switch signal is generated by at least one connection switch activation circuit (24, 26, 28) associated with one consumer (V₁, V₂, V₃) of electrical energy of the plurality of consumers (V₁, V₂, V₃) of electrical energy,:
- deactivates all connection switch activation circuits (24, 26, 28), or/and
- switches at least some of the connection switches (14, 16, 18), preferably all connection switches (14, 16, 18), into the closed state thereof.

15. The connection circuit as claimed in claim 13 and claim 14, **characterized in that** the connection switch activation unit (20) is designed, in order to deactivate all connection switch activation circuits (24, 26, 28), to switch the safety circuit (52) into an interrupt state interrupting the connection between the direct current source (12) and all consumers (V₁, V₂, V₃) of electrical energy of the plurality of consumers (V₁, V₂, V₃) of electrical energy.

16. The connection circuit as claimed in one of claims 1 to 15, **characterized in that** the switching transistor (32) is a bipolar transistor.

17. An on-board electrical system for a vehicle, having a direct current source (12) and consumers (V₁, V₂, V₃) of electrical energy to be supplied with electrical energy from the direct current source (12), wherein a plurality of the consumers (V₁, V₂, V₃) of electrical energy is connected or can be connected to the direct current source (12) by means of a connection circuit (10) designed as claimed in one of claims 1 to 16.

## Revendications

1. Un circuit de connexion pour connecter une pluralité de consommateurs (V₁, V₂, V₃) d'énergie électrique, de préférence dans un véhicule, à une source de courant continu (12), comprenant :
- associé à chacun des consommateur (V₁, V₂, V₃) d'énergie électrique d'une pluralité de consommateurs (V₁, V₂, V₃) d'énergie électrique, un commutateur de connexion (14, 16, 18) pour établir une connexion entre le consommateur (V₁, V₂, V₃) d'énergie électrique et une source de courant continu (12),
- associé à chacun des consommateurs (V₁, V₂, V₃) d'énergie électrique de la pluralité de consommateurs (V₁, V₂, V₃) d'énergie électrique, un circuit d'activation de commutateur de connexion (24, 26, 28) chacun pour fournir un courant au consommateur respectif (V₁, V₂, V₃) d'énergie électrique et pour activer le commutateur de connexion (14, 16, 18) associé au consommateur respectif (V₁, V₂, V₃) d'énergie électrique afin d'établir la connexion entre le consommateur respectif (V₁, V₂, V₃) d'énergie électrique et la source de courant continu (24, 26, 28),
dans lequel le circuit d'activation du commutateur de connexion comprend un transistor de commutation (32), dans lequel une tension base-émetteur du transistor de commutation (32) dépend du courant fourni au consommateur d'énergie électrique associé via le circuit d'activation de commutateur de connexion (24, 26, 28), et dans lequel, si une tension base-émetteur au niveau d'une borne de collecteur (46) du transistor de commutation (32) dépasse une tension de seuil, un signal de commutation est généré pour commuter le commutateur de connexion associé (14, 16, 18) dans un état fermé qui établit une connexion entre le consommateur associé (V₁, V₂, V₃) d'énergie électrique et la source de courant continu (12).

2. Le circuit de connexion selon la revendication 1, **caractérisé en ce que** le circuit d'activation de commutateur de connexion (24, 26, 28) comprend un circuit à diodes (30), dans lequel la tension base-émetteur du transistor de commutation (32) est liée à une chute de tension au niveau d'une diode de référence (34 ; 34') dans le circuit à diodes (30).

3. Le circuit de connexion selon la revendication 2, **caractérisé en ce que** la tension base-émetteur correspond sensiblement à une chute de tension au niveau de la diode de référence (34).

4. Le circuit de connexion selon la revendication 3, **caractérisé en ce que** la diode de référence (34) est une diode p-n, de préférence une diode au silicium.

5. Le circuit de connexion selon la revendication 2, **caractérisé en ce que** le circuit à diodes (30) comporte au moins une résistance électrique (74) connectée en série avec la diode de référence (34'), et **en ce que** la tension base-émetteur correspond sensiblement à une chute de tension au niveau de la connexion en série de la diode de référence (34') et d'au moins une résistance électrique (74).

6. Le circuit de connexion selon la revendication 5, **caractérisé en ce que** la diode de référence (34') est une diode Schottky ou une diode au germanium.

7. Le circuit de connexion selon l'une des revendications 2 à 6, **caractérisé en ce que** le circuit à diodes (30) comporte une diode de charge (76 ; 76') connectée en parallèle à la diode de référence (34').

8. Le circuit de connexion selon la revendication 7, **caractérisé en ce qu'**une tension de seuil de la diode de charge (76) est supérieure à une tension de seuil de la diode de référence (34').

9. Le circuit de connexion selon l'une des revendications 1 à 8, **caractérisé en ce que** le circuit d'activation de commutateur de connexion (24, 26, 28) comporte un circuit de signal de commande (48, 50, 51), dans lequel le circuit de signal de commande (48, 50, 51) est conçu pour générer, lorsqu'un signal de commutation a été généré à la borne de collecteur (46) du circuit d'activation de commutateur de connexion (24, 26, 28), un signal de commande à appliquer au commutateur de connexion associé (14, 16, 18) pour commuter le commutateur de connexion (14, 16, 18) dans son état fermé.

10. Le circuit de connexion selon l'une des revendications 1 à 9, **caractérisé en ce que** le circuit d'activation de commutateur de connexion (24, 26, 28) comporte une borne d'entrée (36) qui est connectée ou doit être connectée à la source de courant continu (12), et une borne de sortie (38) qui est connectée ou doit être connectée au consommateur associé (V₁, V₂, V₃) d'énergie électrique.

11. Le circuit de connexion selon la revendication 2 et la revendication 10, **caractérisé en ce que** la diode de référence (34 ; 34') est connectée dans le sens direct entre la borne d'entrée (36) et la borne de sortie (38).

12. Le circuit de connexion selon la revendication 10 ou 11, **caractérisé en ce qu'**une borne d'émetteur (40) du transistor de commutation (2) est connectée à la borne d'entrée (36), et/ou **en ce qu'**une borne de base (42) du transistor de commutation (32) est connectée à la borne de sortie (38).

13. Le circuit de connexion selon l'une des revendications 10 à 12, **caractérisé en ce qu'**un circuit de sécurité (52) est prévu, dans lequel les bornes d'entrée (32) de tous les circuits d'activation de commutateur de connexion (24, 26, 28) sont connectées ou doivent être connectées via le circuit de sécurité (52) à la source de courant continu (12), dans lequel le circuit de sécurité (52) est conçu pour surveiller le courant provenant de la source de courant continu (12) vers tous les consommateurs (V₁, V₂, V₃) d'énergie électrique de la pluralité de consommateurs (V₁, V₂, V₃) d'énergie électrique et, dans le cas où le courant dépasse un courant seuil, pour interrompre la connexion entre la source de courant continu (12) et tous les consommateurs (V₁, V₂, V₃) d'énergie électrique de la pluralité de consommateurs (V₁, V₂, V₃) d'énergie électrique.

14. Le circuit de connexion selon l'une des revendications 1 à 13, **caractérisé en ce qu'**une unité d'activation de circuit de connexion (20) est prévue, dans lequel l'unité d'activation de circuit de connexion (20), lorsque le signal de commutation est généré par au moins un circuit d'activation de commutateur de connexion (24, 26, 28) associé à un consommateur (V₁, V₂, V₃) d'énergie électrique parmi la pluralité de consommateurs (V₁, V₂, V₃) d'énergie électrique :
- désactive tous les circuits d'activation de commutateur de connexion (24, 26, 28),
et/ou
- commute au moins certains des commutateurs de connexion (14, 16, 18), de préférence tous les commutateurs de connexion (14, 16, 18), dans leur état fermé.

15. Le circuit de connexion selon la revendication 13 et la revendication 14, **caractérisé en ce que** l'unité d'activation des commutateurs de connexion (20) est conçue, afin de désactiver tous les circuits d'activation de commutateur de connexion (24, 26, 28), pour commuter le circuit de sécurité (52) dans un état d'interruption interrompant la connexion entre la source de courant continu (12) et tous les consommateurs (V₁, V₂, V₃) d'énergie électrique de la pluralité de consommateurs (V₁, V₂, V₃) d'énergie électrique.

16. Le circuit de connexion selon l'une des revendications 1 à 15, **caractérisé en ce que** le transistor de commutation (32) est un transistor bipolaire.

17. Un système électrique embarqué pour un véhicule, comportant une source de courant continu (12) et des consommateurs (V₁, V₂, V₃) d'énergie électrique à alimenter en énergie électrique à partir de la source de courant continu (12), dans lequel une pluralité de consommateurs (V₁, V₂, V₃) d'énergie électrique est connectée ou peut être connectée à la source de courant continu (12) au moyen d'un circuit de connexion (10) conçu selon l'une des revendications 1 à 16.
